# EUROPEAN PATENT APPLICATION

(11) **EP 4 614 899 A1**
(43) Date of publication of application: **10.09.2025**
(21) Application number: 22964020.6
(22) Date of filing: 04.11.2022
(51) Int. Cl.: H04L 27/00

(54) **DETERMINATION METHOD AND APPARATUS FOR CHANNEL ACCESS PRIORITY CLASS (CAPC), AND CONFIGURATION METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/129838
(87) International publication number: WO 2024/092711

(57) **Abstract**

Disclosed in the embodiments of the present disclosure are a determination method and apparatus for a channel access priority class (CAPC), which method and apparatus can be applied to a sidelink-unlicensed (SL-U) scenario. The method comprises: a first terminal device determining a CAPC of a sidelink data radio bearer (SL DRB). By implementing the embodiments of the present disclosure, the problem of how a terminal device acquires a CAPC of an SL DRB in an SL-U scenario can be solved, and it is ensured that the CAPC of the SL DRB that is determined by the terminal device is more accurate, such that a priority class during a listen-before-talk (LBT) process can be guaranteed.

## Description

### FIELD

The present disclosure relates to the field of communication technologies, and in particular to a method for determining a channel access priority class (CAPC), a method for configuring a CAPC and a device thereof.

### BACKGROUND

NR-U (5G New Radio Unlicensed) is a project of 3GPP (3rd Generation Partnership Project) in Release 16 (R16), which provides necessary technologies for operators to fully integrate unlicensed spectrums into a 5G network. Uplink and downlink operations in unlicensed frequency bands are supported by NR-U. In NR-U, channel accesses for both downlink and uplink depend on the feature of listen before talk (LBT). A wireless device or a base station shall first "sense" a communication channel to ensure that there is no communication before any transmission. When a communication channel is an unlicensed wideband carrier (for example, hundreds of megahertz), the LBT procedure involves detecting energy levels across multiple sub-bands of the communication channel. LBT parameters (such as parameters of type/duration, and clear channel assessment) are configured by the base station for the wireless device. CAPC (Channel Access Priority Class) is a parameter related to LBT. A priority in channel contention depends on different CAPCs. The smaller a CAPC value is, the higher the priority is.

In the related technology, sidelink (SL, also referred to as direct communication) enhancement in Release 18 (R18) supports a Sidelink transmission in an unlicensed spectrum, that is, supports a sidelink-unlicensed (SL-U) technology for terminal-to-terminal communication over unlicensed frequency bands. The Sidelink transmission in the unlicensed spectrum also requires LBT and also supports CAPC.

However, there is currently a lack of effective methods for a terminal to determine CAPC in the scenario of SL-U.

### SUMMARY

Embodiments of the present disclosure provide a method for determining a channel access priority class (CAPC), a method for configuring a CAPC and a device thereof, which can be applied to a scenario of a terminal sidelink on an unlicensed frequency band (sidelink-unlicensed, SL-U), and can solve a problem of how a terminal obtains a CAPC of an SL DRB in the scenario of the Sidelink-U, ensuring that the CAPC of the SL DRB determined by the terminal is more accurate, thereby ensuring a priority in a listen before talk (LBT) procedure.

In a first aspect, an embodiment of the present disclosure provides a method for determining a channel access priority class (CAPC), which is applied to a scenario of an unlicensed spectrum, and is executed by a first terminal. The method includes: determining the CAPC of a sidelink data radio bearer (SL DRB).

In the technical solution, the problem of how the terminal obtains the CAPC of the SL DRB in the scenario of the Sidelink-U can be solved, ensuring that the CAPC of the SL DRB determined by the terminal is more accurate, thereby guaranteeing a priority in a listen before talk (LBT) procedure.

In an implementation, the determining the CAPC of the SL DRB includes: determining the CAPC of the SL DRB based on a mapping table between PC5 quality of service indicators (PQIs) and CAPCs.

In the technical solution, it is designed that the mapping table between the PQIs and the CAPCs is be applicable to the side of the terminal, so that the terminal can determine the CAPC of the SL DRB based on the mapping table, which can solve the problem of how the terminal obtains the CAPC of the SL DRB in the scenario of the Sidelink-U, ensuring the CAPC of the SL DRB determined by the terminal to be more accurate, thereby ensuring the priority in a listen before talk (LBT) procedure.

In an implementation, the determining the CAPC of the SL DRB based on the mapping table between the PQIs and the CAPCs includes: in a case that the first terminal is in a first state, determining, by the first terminal, the CAPC of the SL DRB based on the mapping table between the PQIs and the CAPCs; where the first state includes any one of: a radio resource control (RRC) idle (IDLE) state; an RRC inactive (INACTIVE) state; or an out of coverage (OOC) state.

In a possible implementation, the method further includes: in response to obtaining the CAPC of the SL DRB from a system information block (SIB) or a pre-configuration, ignoring, by the first terminal, the CAPC of the SL DRB obtained.

In a possible implementation, the determining, by the first terminal, the CAPC of the SL DRB based on the mapping table between the PQIs and the CAPCs includes: in response to an SIB or a pre-configuration not carrying the CAPC of the SL DRB, determining, by the first terminal, the CAPC of the SL DRB based on the mapping table between the PQIs and the CAPCs.

In a possible implementation manner, the determining the CAPC of the SL DRB includes: in a case that the first terminal is in a first state, in response to an SIB or a pre-configuration carrying the CAPC of the SL DRB, determining, by the first terminal, the CAPC of the SL DRB based on the CAPC of the SL DRB carried in the SIB or the pre-configuration.

In an implementation, the determining the CAPC of the SL DRB based on the mapping table between the PQIs and the CAPCs includes: in a case that the first terminal operates in resource allocation mode 2, determining, by the first terminal, the CAPC of the SL DRB based on the mapping table between the PQIs and the CAPCs.

In a possible implementation, the method further includes: in response to obtaining the CAPC of the SL DRB from a first dedicated RRC signaling or an SIB or a pre-configuration, ignoring, by the first terminal, the CAPC of the SL DRB obtained.

In a possible implementation manner, the determining, by the first terminal, the CAPC of the SL DRB based on the mapping table between the PQIs and the CAPCs includes: in response to a first dedicated RRC signaling or an SIB or a pre-configuration not carrying the CAPC of the SL DRB, determining, by the first terminal, the CAPC of the SL DRB based on the mapping table between the PQIs and the CAPCs.

In a possible implementation manner, the determining the CAPC of the SL DRB includes: in a case that the first terminal operates in resource allocation mode 2, in response to a first dedicated RRC signaling or an SIB or a pre-configuration carrying the CAPC of the SL DRB, determining, by the first terminal, the CAPC of the SL DRB based on the CAPC of the SL DRB carried in the first dedicated RRC signaling or the SIB or the pre-configuration.

In an implementation, the determining, by the first terminal, the CAPC of the SL DRB based on the mapping table between the PQIs and the CAPCs includes: determining a PQI of a quality of service (QoS) flow multiplexed in one SL DRB; and determining the CAPC of the SL DRB from the mapping table between the PQIs and the CAPCs according to the PQI determined.

In a possible implementation manner, the determining the CAPC of the SL DRB from the mapping table between the PQIs and the CAPCs according to the PQI determined includes: in response to the PQI determined being a standardized PQI, determining the CAPC of the SL DRB from the mapping table between the PQIs and the CAPCs according to the PQI determined; or, in response to the PQI determined being a non-standardized PQI, determining a standardized PQI best matching a QoS attribute based on the QoS attribute corresponding to the PQI determined, and determining the CAPC of the SL DRB from the mapping table between the PQIs and the CAPCs according to the standardized PQI best matching the QoS attribute.

In an optional implementation, the method further includes: configuring the CAPC of the SL DRB to a second terminal via an SL RRC reconfiguration message.

In a possible implementation manner, the determining the CAPC of the SL DRB based on the mapping table between the PQIs and the CAPCs includes: in a case that the first terminal is in a first state, obtaining, by the first terminal, configuration information of at least one default SL DRB from an SIB or a pre-configuration signaling, where the configuration information of the at least one default SL DRB includes the CAPC of the at least one default SL DRB; determining a PQI of a QoS flow multiplexed in one DRB; in a case that the PQI determined is a non-standardized PQI, obtaining, by the first terminal, a target default SL DRB best matching a QoS attribute corresponding to the PQI determined from the at least one default SL DRB; and determining, by the first terminal, the CAPC of the SL DRB based on the CAPC of the target default SL DRB.

In a second aspect, an embodiment of the present disclosure provides another method for configuring a channel access priority class (CAPC), which is applied to an unlicensed spectrum scenario, and executed by a second terminal. The method includes: receiving the CAPC of a sidelink data radio bearer (SL DRB) configured by a first terminal via a sidelink radio resource control (SL RRC) reconfiguration message.

In an implementation, the CAPC of the SL DRB is determined by the first terminal based on a mapping table between PC5 quality of service indicators (PQIs) and CAPCs; or the CAPC of the SL DRB is configured or pre-configured by a network device.

In a third aspect, an embodiment of the present disclosure provides a communication device. The communication device includes some or all of functions of the first terminal for implementing the method described in the above first aspect. For example, the functions of the communication device may include some or all of the functions in the embodiments of the present disclosure, or may include the functions of implementing any one of the embodiments of the present disclosure alone. The functions may be implemented by a hardware, or by a hardware executing a corresponding software. The hardware or the software includes one or more units or modules corresponding to the above functions.

In an implementation, the structure of the communication device may include a transceiving module and a processing module, and the processing module is configured to support the communication device to perform the corresponding functions in the above method. The transceiving module is configured to support communications between the communication device and other devices. The communication device may also include a storage module, which is coupled to the transceiving module and the processing module, and may store computer programs and data necessary for the communication device.

As an example, the processing module may be a processor, the transceiving module may be a transceiver or a communication interface, and the storage module may be a memory.

In a fourth aspect, an embodiment of the present disclosure provides another communication device. The communication device includes some or all of the functions of the second terminal for implementing method examples described in the above second aspect. For example, the functions of the communication device may include some or all of the functions in the embodiments of the present disclosure, or may include the functions of implementing any one of the embodiments of the present disclosure alone. The functions may be implemented by a hardware, or may be implemented by a hardware executing a corresponding software. The hardware or the software includes one or more units or modules corresponding to the above functions.

In an implementation, a structure of the communication device may include a transceiving module and a processing module, and the processing module is configured to support the communication device to perform the corresponding functions in the above method. The transceiving module is configured to support communications between the communication device and other devices. The communication device may also include a storage module, which is coupled to the transceiving module and the processing module, and may store computer programs and data necessary for the communication device.

In a fifth aspect, an embodiment of the present disclosure provides a communication device, which includes a processor. When the processor invokes a computer program in a memory, the method described in the above first aspect is executed.

In a sixth aspect, an embodiment of the present disclosure provides a communication device, which includes a processor. When the processor invokes a computer program in a memory, the method described in the above second aspect is executed.

In a seventh aspect, an embodiment of the present disclosure provides a communication device, which includes a processor and a memory. A computer program is stored in the memory; the processor is configured to execute the computer program stored in the memory, to cause the communication device to execute the method described in the above first aspect.

In an eighth aspect, an embodiment of the present disclosure provides a communication device, which includes a processor and a memory. A computer program is stored in the memory; the processor is configured to execute the computer program stored in the memory, to cause the communication device to execute the method described in the above second aspect.

In a ninth aspect, an embodiment of the present disclosure provides a communication device. The communication device includes a processor and an interface circuit. The interface circuit is configured to receive code instructions and transmit the code instructions to the processor. The processor is configured to execute the code instructions to cause the device to execute the method described in the above first aspect.

In a tenth aspect, an embodiment of the present disclosure provides a communication device. The communication device includes a processor and an interface circuit. The interface circuit is configured to receive code instructions and transmit the code instructions to the processor. The processor is configured to execute the code instructions to cause the device to execute the method described in the above second aspect.

In the eleventh aspect, an embodiment of the present disclosure provides a communication system. The system includes the communication device described in the third aspect and the communication device described in the fourth aspect, or the system includes the communication device described in the fifth aspect and the communication device described in the sixth aspect, or the system includes the communication device described in the seventh aspect and the communication device described in the eighth aspect, or the system includes the communication device described in the ninth aspect and the communication device described in the tenth aspect.

In a twelfth aspect, an embodiment of the present disclosure provides a computer-readable storage medium, configured to store instructions used by the above first terminal. The instructions, when executed, cause the first terminal to execute the method described in the above first aspect.

In a thirteenth aspect, an embodiment of the present disclosure provides a computer-readable storage medium, configured to store instructions used by the above second terminal. The instructions, when executed, cause the second terminal to execute the method described in the above second aspect.

In a fourteenth aspect, the present disclosure further provides a computer program product, which, when running on a computer, causes the computer to execute the method described in any one of the above first aspect.

In a fifteenth aspect, the present disclosure further provides a computer program product, which, when running on a computer, causes the computer to execute the method described in any one of the above second aspect.

In a sixteenth aspect, the present disclosure provides a chip system. The chip system includes at least one processor and an interface for supporting the first terminal to implement the functions involved in the first aspect, for example, determining or processing at least one of data or information involved in the above method. In a possible design, the chip system further includes a memory, and the memory is configured to store necessary computer programs and data for the first terminal. The chip system may be composed of chips, or may include a chip and other discrete devices.

In a seventeenth aspect, the present disclosure provides a chip system. The chip system includes at least one processor and an interface for supporting the second terminal to implement the functions involved in the second aspect, for example, determining or processing at least one of data or information involved in the above method. In a possible design, the chip system further includes a memory, and the memory is configured to store necessary computer programs and data for the second terminal. The chip system may be composed of chips, or may include a chip and other discrete devices.

In an eighteenth aspect, the present disclosure a computer program that, when running on a computer, causes the computer to perform the method described in any one of the above first aspect.

In a nineteenth aspect, the present disclosure a computer program that, when running on a computer, causes the computer to perform the method described in any one of the above second aspect.

### BRIEF DESCRIPTION OF THE DRAWINGS

In order to more clearly illustrate technical solutions in embodiments of the present disclosure or in the background technology, the drawings required to be used in the embodiments of the present disclosure or the background technology will be described below.
FIG. 1 is a flow chart of a method for determining a channel access priority class (CAPC) provided by an embodiment of the present disclosure.
FIG. 2 is a flow chart of another method for determining a channel access priority class (CAPC) provided by an embodiment of the present disclosure.
FIG. 3 is a flow chart of another method for determining a channel access priority class (CAPC) provided by an embodiment of the present disclosure.
FIG. 4 is a flow chart of another method for determining a channel access priority class (CAPC) provided by an embodiment of the present disclosure.
FIG. 5 is a flow chart of a method for configuring a channel access priority class (CAPC) provided by an embodiment of the present disclosure.
FIG. 6 is a schematic structural diagram of a communication device provided by an embodiment of the present disclosure.
FIG. 7 is a schematic structural diagram of another communication device provided by an embodiment of the present disclosure.
FIG. 8 is a schematic structural diagram of a chip provided by an embodiment of the present disclosure.

### DETAILED DESCRIPTION

The embodiments of the present disclosure will be described in detail below, and examples of the embodiments will be shown in the accompanying drawings, where same or similar reference numerals throughout represent same or similar elements or elements having same or similar functions. The embodiments described below with reference to the accompanying drawings are exemplary and are intended to explain the present disclosure, and should not be construed as limiting the present disclosure. In the description of the present disclosure, unless otherwise specified, "/" represents an or relation, for example, A/B may represent A or B; "and/or" in this specification is merely a description of the association relationship of associated objects, indicating that three relationships may exist, for example, A and/or B may represent: alone A, both A and B, and alone B.

Terms used in the embodiments of the present disclosure are only for the purpose of describing specific embodiments, and shall not be construed as limiting the present disclosure. As used in the embodiments of the present disclosure and the appended claims, terms such as "a", "an" and "the" in a singular form are intended to include plural forms, unless clearly indicated in the context otherwise.

It should be understood that terms such as "first", "second" and "third" may be used in the embodiments of the present disclosure for describing various information, the information should not be limited by these terms. These terms are only used for distinguishing information of the same type from others. For example, first information may also be referred to as second information, and similarly, the second information may also be referred to as the first information, without departing from the scope of the embodiments of the present disclosure. The terms "if" and "in a case that" may be construed as "when" or "upon" or "in response to determining" depending on the context.

The embodiments of the present disclosure will be described in detail below, examples of which are illustrated in the accompanying drawings, where the same or similar reference signs refer to the same or similar elements throughout the specification. The embodiments described below with reference to the accompanying drawings are exemplary and are intended to explain the present disclosure, but should not be construed as limiting the present disclosure.

It should be noted that in order to support sidelink communication between terminals, a sidelink (SL) communication mode is introduced, and an interface between terminals is PC-5. According to a correspondence between a sending terminal and a receiving terminal, three transmission modes are supported by the Sidelink, which include unicast, multicast and broadcast. The sending terminal sends Sidelink control information (SCI) on a PSCCH (Physical Sidelink Control Channel), and sends a second stage SCI on a PSSCH (Physical Sidelink Shared Channel), which carries a resource location of transmission data, a source identifier and a target identifier, etc. For a data packet enabled by HARQ (Hybrid Automatic Repeat reQuest) feedback, the receiving terminal performs the HARQ-ACK (Hybrid Automatic Retransmission Request Acknowledgement) feedback for the PSSCH on a PSFCH (Physical Sidelink Feedback Channel).

There are two transmission resource allocation modes in Sidelink communication, one is dynamic scheduling by a network (resource allocation mode), and the other is autonomously selecting a transmission resource by a terminal from a resource pool broadcast by the network (resource allocation mode). The dynamic scheduling means that the network dynamically allocates a transmission resource on the Sidelink to the terminal based on cached data reported by the terminal, while the autonomously selecting means that the terminal randomly selects a transmission resource from a resource pool broadcasted or pre-configured by the network. A network device may configure multiple resource pools for the terminal on one BWP (Band WidthPart). A specific allocation mode to be used is configured by the network device via an RRC (Radio Resource Control) signaling.

Reporting of SUI (Sidelink UE information) is supported by the Sidelink communication. The SUI is assistance information sent between a user equipment (UE) and a network device. The UE in a connected state may report the assistance information via the SUI to assist the network device in resource configuration, such as SRB (Signaling Radio Bearer) /DRB (Data Radio Bearer) configuration. The UE in the connected state may also report the assistance information via UAI (UE assistance information). The reporting the assistance information via the UAI requires the network device to enable it first through an RRC signaling. The SUI may carry QoS (Quality of Service) information to assist the network device in configuring an SL DRB. The QoS information carries a parameter of a PQI (PC5 5th generation QoS Indicator). A value of the PQI may reflect a QoS attribute to a certain extent. Factors affecting the value of the PQI include, but are not limited to, a priority, a delay tolerance, a bit error rate, etc.

The Sidelink communication supports two states of the terminal, which include: in coverage and out of coverage. The terminal in coverage may be in an RRC CONNECETED state or RRC IDLE/RRC INACTIVE state. The terminal in the RRC connected state may obtain SL DRB configuration through dedicated RRC signaling; the terminal in the RRC IDLE/RRC INACTIVE state may obtain the SL DRB configuration through an SIB (System Information Block), and the terminal in the OOC (out of coverage) state obtains the SL DRB configuration based on pre-configuration.

NR-U (5G New Radio Unlicensed) is a project of 3GPP (3rd Generation Partnership Project) in Release 16 (R16), which provides necessary technologies for operators to fully integrate unlicensed spectrums into a 5G network. Uplink and downlink operations in unlicensed frequency bands are supported by NR-U. In NR-U, channel accesses for both downlink and uplink depend on the feature of listen before talk (LBT). A wireless device or a base station shall first "sense" a communication channel to ensure that there is no communication before any transmission. When a communication channel is an unlicensed wideband carrier (for example, hundreds of megahertz), the LBT procedure involves detecting energy levels across multiple sub-bands of the communication channel. LBT parameters (such as parameters of type/duration, and clear channel assessment) are configured by the base station for the wireless device. CAPC (Channel Access Priority Class) is a parameter related to LBT. A priority in channel contention depends on different CAPCs. The smaller a CAPC value is, the higher the priority is.

In the related technology, sidelink (SL, also referred to as direct communication) enhancement in Release 18 (R18) supports a Sidelink transmission in an unlicensed spectrum, that is, supports a sidelink-unlicensed (SL-U) technology for terminal-to-terminal communication over unlicensed frequency bands. The Sidelink transmission in the unlicensed spectrum also requires LBT and also supports CAPC.

However, there is currently a lack of effective methods for a terminal to determine CAPC in SL-U scenarios.

In view of this, embodiments of the present disclosure provide a method for determining a channel access priority class (CAPC), a method for configuring a CAPC and a device thereof, which are applied to a scenario of a terminal sidelink on an unlicensed frequency band (sidelink-unlicensed, SL-U, also referred to as sidelink-U), and can solve a problem of how a terminal obtains a CAPC of an SL DRB in the scenario of the Sidelink-U, ensuring that the CAPC of the SL DRB determined by the terminal is more accurate, thereby ensuring a priority in a listen before talk (LBT) procedure.

It should be noted that the network device in the embodiments of the present disclosure is an entity on the network side for receiving or transmitting signals. For example, the network device may be an evolved NodeB (eNB), a transmission reception point (TRP), a next generation NodeB (gNB) in an NR system, a base station in other future mobile communication systems, an access node in a wireless fidelity (WiFi) system, or the like. The specific technique and the specific device form used by the network device are not limited in the embodiments of the present disclosure. The network device provided by the embodiments of the present disclosure may include a centralized unit (CU) and a distributed unit (DU). The CU may also be referred to as a control unit. Protocol layers of the network device may be split by means of the structure of CU-DU, where functions of some protocol layers are arranged on the CU for centralized control, some or all of functions of the remaining protocol layers are distributed in the DU, and the CU centrally controls the DU.

The terminal in the embodiments of the present disclosure is an entity on the user side for receiving or transmitting signals, such as a mobile phone. The terminal may also be referred to as terminal device, user equipment (UE), mobile station (MS), mobile terminal (MT), etc. The terminal may be a car with communication functions, a smart car, a mobile phone, a wearable device, a tablet computer (Pad), a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in smart city, a wireless terminal in smart home, etc. The specific technique and the specific device form used by the terminal are not limited in the embodiments of the present disclosure. The first terminal mentioned in the embodiments of the present disclosure may refer to a terminal, and the second terminal may refer to another terminal different from the first terminal, where the second terminal is a peer end of the first terminal, and the first terminal and the second terminal communicate via Sidelink.

A method for determining a channel access priority class (CAPC), a method for configuring a CAPC and a device thereof provided by the present disclosure will be described below in detail in conjunction with the accompanying drawings.

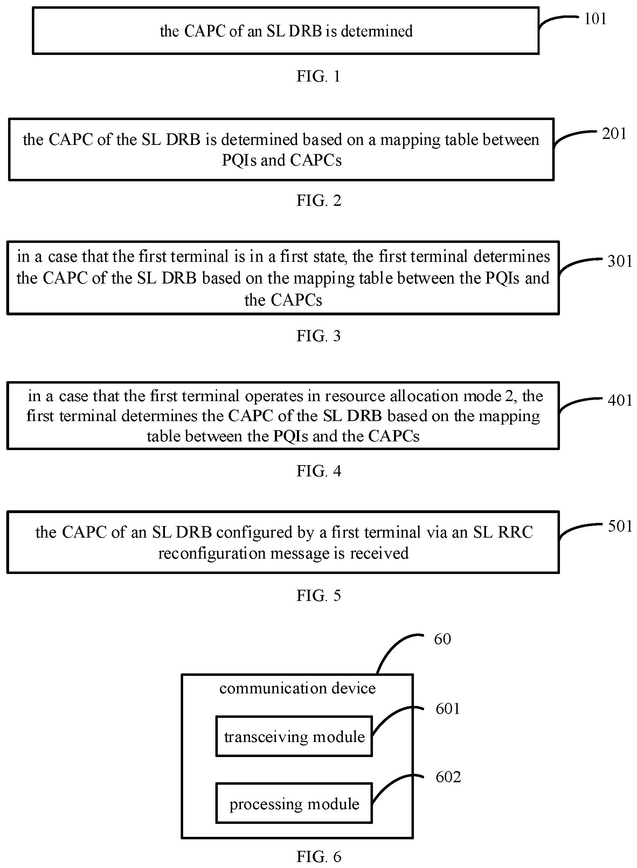

Referring to FIG. 1, FIG. 1 is a flow chart of a method for determining a CAPC provided by an embodiment of the present disclosure. It should be noted that the determination method may be applied to SL-U scenarios, and the determination method of the embodiment of the present disclosure may be executed by a first terminal. As shown in FIG. 1, the method may include, but not limited to, the following steps.

In step 101, the CAPC of an SL DRB is determined.

In a possible implementation, the CAPC of the SL DRB may be determined by the first terminal based on a mapping table between PQIs and CAPCs.

In another possible implementation, the CAPC of the SL DRB may be configured or pre-configured by a network device.

By implementing the embodiments of the present disclosure, the problem of how the terminal obtains the CAPC of the SL DRB in the scenario of the Sidelink-U can be solved, ensuring that the CAPC of the SL DRB determined by the terminal is more accurate, thereby ensuring a priority in a listen before talk (LBT) procedure.

Referring to FIG. 2, FIG. 2 is a flow chart of a method for determining a channel access priority class (CAPC) provided by an embodiment of the present disclosure. It should be noted that the determination method may be applied to SL-U scenarios, and the determination method of the embodiment of the present disclosure may be executed by a first terminal. As shown in FIG. 2, the method may include, but not limited to, the following steps.

In step 201, the CAPC of the SL DRB is determined based on a mapping table between PQIs and CAPCs.

In the embodiment of the present disclosure, the mapping table includes a mapping relationship between PQIs and CAPCs. It is configured in the embodiment of the present disclosure that the mapping table between the PQIs and the CAPCs is applicable to the side of the terminal (for example, the first terminal described in this specification).

In a possible implementation, the first terminal may determine a PQI of a QoS flow multiplexed in one SL DRB, and may determine the CAPC of the SL DRB from the mapping table between the PQIs and the CAPCs according to the PQI determined.

It should be noted that the PQI may be a standardized PQI. In a case that the PQI is the standardized PQI, after the first terminal determines the PQI of the QoS flow multiplexed in one SL DRB, the first terminal may query the mapping table between the PQIs and the CAPCs according to the determined PQI, and may find the CAPC that has a mapping relationship with the PQI from the mapping table, to determine the CAPC of the SL DRB. For example, if a value of a PQI of a QoS flow multiplexed in one SL DRB is determined to be 23, and the PQI is a standardized PQI, then the mapping table includes a CAPC corresponding to the PQI of 23, so the CAPC corresponding to the PQI of 23 may be determined as the CAPC of the SL DRB by querying the mapping table. For another example, if values of PQIs of QoS flows multiplexed in one SL DRB are determined to be 23 and 58, and the PQIs are standardized PQIs, then the mapping table includes a CAPC corresponding to the PQI of 23 and a CAPC corresponding to the PQI of 58, and the CAPC of the SL DRB is determined based on the CAPC corresponding to the PQI of 23 and the CAPC corresponding to the PQI of 58.

It should also be noted that the PQI may also be a non-standardized PQI. In a case that the PQI is the non-standardized PQI, the first terminal determines that the PQIs of the QoS flows multiplexed in one SL DRB include a non-standardized PQI, the first terminal may determine a standardized PQI best matching a QoS attribute corresponding to the non-standardized PQI based on the QoS attribute corresponding to the non-standardized PQI, and may determine a CAPC corresponding to the standardized PQI best matching the QoS attribute corresponding to the non-standardized PQI as the CAPC corresponding to the non-standardized PQI, so as to further determine the CAPC of the SL DRB. For example, if a value of a PQI of a QoS flow multiplexed in one SL DRB is determined to be 50, it is assumed that there is no PQI with a value of 50 in the mapping table between the PQIs and the CAPCs, that is, the PQI is a non-standardized PQI, the first terminal may determine a QoS attribute corresponding to the PQI, may determine a standardized PQI best matching the QoS attribute, may use the CAPC corresponding to the standardized PQI best matching the QoS attribute as the CAPC corresponding to the non-standardized PQI, so as to further determine the CAPC of the SL DRB.

In a possible implementation, in a case that there are multiple QoS flows, PQIs of the multiple QoS flows multiplexed in one SL DRB may be determined, CAPCs corresponding to the PQIs of the multiple QoS flows may be determined by querying the mapping table according to the PQIs of the multiple QoS flows, and the CAPC of the SL DRB may be determined according to the CAPCs corresponding to the PQIs of the multiple QoS flows. If a PQI of a current QoS flow is a standardized PQI, a CAPC corresponding to the standardized PQI is determined by querying the mapping table; and if the PQI of the current QoS flow is a non-standardized PQI, a standardized PQI best matching a QoS attribute of the non-standardized PQI is first determined, the mapping table is looked up by using the standardized PQI best matching the QoS attribute of the non-standardized PQI, to find a CAPC corresponding to the standardized PQI best matching the QoS attribute, and takes the CAPC as the CAPC corresponding to the non-standardized PQI. In order to comprehensively consider the fairness between different types of services, the first terminal determines the CAPC of the SL DRB by taking the CAPCs of the multiple QoS flows multiplexed in the SL DRB into comprehensive consideration.

For example, it is assumed that there are three QoS flows multiplexed in one SLDRB, such as QoS flow 1, QoS flow 2, and QoS flow 3. A value of a PQI of the QoS flow 1 multiplexed in the one SL DRB is 22, a value of a PQI of the QoS flow 2 is 23, and a value of a PQI of the QoS flow 3 is 24. The PQIs corresponding to the QoS flow 1, the QoS flow 2, and the QoS flow 3 are all standardized PQIs. By referring to the mapping table, it is determined that a value of a CAPC corresponding to the PQI of the QoS flow 1 is 1, a value of a CAPC corresponding to the PQI of the QoS flow 2 is 1, and a value of a CAPC corresponding to the PQI of the QoS flow 3 is 2. A possible implementation method is that since the proportion of the CAPCs with the value of 1 is greater than that of the CAPC with the value of 2, a value of the CAPC of the SL DRB may be determined to be 1. In this way, fairness between different types of services can be guaranteed. It should be noted that when the terminal simultaneously considers the CAPCs of multiple QoS flows multiplexed in the SL DRB, the terminal may also have other implementation methods to determine the CAPC of the SL DRB. How to determine the CAPC of the SL DRB may be implemented by the terminal, which is not limited in the embodiments.

By implementing the embodiments of the present disclosure, it is configured that the mapping table between the PQIs and the CAPCs is applicable to the side of the terminal. In this way, the terminal can determine the CAPC of the SL DRB based on the mapping table, which can solve a problem of how the terminal obtains the CAPC of the SL DRB in the scenario of the Sidelink-U, ensuring the CAPC of the SL DRB determined by the terminal to be more accurate, thereby ensuring a priority in a listen before talk (LBT) procedure.

It should be noted that the Sidelink communication supports two terminal states, which include: in coverage and out of coverage. The terminal in coverage may be in an RRC CONNECETED state or an RRC IDLE/RRC INACTIVE state. In addition, the Sidelink communication has two transmission resource allocation modes, such as resource allocation mode 1 and resource allocation mode 2. The resource allocation mode 1 refers to a mode of dynamic scheduling by a network. The dynamic scheduling means that the network dynamically allocates a transmission resource on the Sidelink to the terminal based on cached data reported by the terminal. The resource allocation mode 2 refers to a mode of autonomously selecting a transmission resource by a terminal from a resource pool broadcast by the network. The autonomously selecting means that the terminal randomly selects a transmission resource from a resource pool broadcasted by the network or pre-configured. A terminal operating in the resource allocation mode 1 needs to be in the RRC connected state; a terminal operating in the resource allocation mode 2 may be in the RRC connected state, or may also be in the RRC IDLE/INACTIVE state or the OOC state. How the first terminal determines the CAPC of the SL DRB in the embodiments of the present disclosure will be described from the perspective of the state of the first terminal, or from the perspective of the resource allocation mode supported by the first terminal.

In some embodiments of the present disclosure, how the first terminal determines the CAPC of the SL DRB may be described from the perspective of the state of the first terminal. Referring to FIG. 3, FIG. 3 is a flow chart of another method for determining a channel access priority class (CAPC) provided by an embodiment of the present disclosure. It should be noted that the determination method may be applied to SL-U scenarios, and the determination method of the embodiment of the present disclosure may be executed by the first terminal. As shown in FIG. 3, the method may include, but not limited to, the following steps.

In step 301, in a case that the first terminal is in a first state, the first terminal determines the CAPC of the SL DRB based on the mapping table between the PQIs and the CAPCs.

In the embodiments of the present disclosure, the first state may include, but not limited to, any one of: an RRC IDLE state; an RRC INACTIVE state; or an OOC state.

In a possible implementation, for a standardized PQI, the first terminal in the first state (such as the RRC IDLE state or the RRC INACTIVE state or the OOC state) may query the mapping table between the PQIs and the CAPCs based on the PQI of the QoS flow multiplexed in one SL DRB, so as to determine the CAPC of the SL DRB. For example, if a value of a PQI of a QoS flow multiplexed in one SL DRB is determined to be 23, and the PQI is a standardized PQI, then the mapping table includes a CAPC corresponding to the PQI of 23, so the CAPC corresponding to the PQI of 23 may be determined as the CAPC of the SL DRB by querying the mapping table. For another example, if values of PQIs of QoS flows multiplexed in one SL DRB are determined to be 23 and 58, and the PQIs are standardized PQIs, then the mapping table includes a CAPC corresponding to the PQI of 23 and a CAPC corresponding to the PQI of 58, and the CAPC of the SL DRB is determined based on the CAPC corresponding to the PQI of 23 and the CAPC corresponding to the PQI of 58.

In another possible implementation, for a non-standardized PQI, the first terminal in the first state (such as the RRC IDLE state, or the RRC INACTIVE state, or the OOC state) may determine a PQI (being a non-standardized PQI) of a QoS flow multiplexed in one SL DRB, may determine a standardized PQI best matching a QoS attribute based on the QoS attribute of the non-standardized PQI, and may query the mapping table between the PQIs and the CAPCs based on the standardized PQI best matching the QoS attribute, so as to determine the CAPC of the SL DRB. Optionally, the first terminal in the first state queries the mapping table by using the standardized PQI best matching the QoS attribute of the non-standardized PQI, to find a CAPC corresponding to the standardized PQI best matching the QoS attribute, and takes the CAPC as the CAPC corresponding to the non-standardized PQI. In order to comprehensively consider the fairness between different types of services, the first terminal determines the CAPC of the SL DRB by taking the CAPCs of the multiple QoS flows multiplexed in the SL DRB into comprehensive consideration.

In a possible implementation, in response to obtaining the CAPC of the SL DRB from an SIB or a pre-configuration, the first terminal ignores the CAPC of the SL DRB obtained. Optionally, even if the first terminal obtains the CAPC of the SL DRB from the SIB or the pre-configuration, the first terminal may ignore configuration or the pre-configuration by the network device and may determine the CAPC of the SL DRB based on the mapping table between the PQIs and the CAPCs. For example, the first terminal may query the mapping table between the PQIs and the CAPCs based on the PQI or the QoS attribute of the QoS flow multiplexed in one SL DRB, to determine the CAPC of the SL DRB. How to determine the CAPC of the SL DRB based on the mapping table between the PQIs and the CAPCs may be implemented by any of the methods in the various embodiments of the present disclosure, which is not limited here and will not be repeated.

In another possible implementation, in response to an SIB or a pre-configuration not carrying the CAPC of the SL DRB, the first terminal determines the CAPC of the SL DRB based on the mapping table between the PQIs and the CAPCs. Optionally, in a case that the SIB or the pre-configuration does not carry the CAPC of the SL DRB, the first terminal determines the CAPC of the SL DRB based on the mapping table between the PQIs and the CAPCs.

In an embodiment of the present disclosure, an example of a possible implementation method for determining the CAPC of the SL DRB is as follows. In a case that the first terminal is in a first state, in response to an SIB or a pre-configuration carrying the CAPC of the SL DRB, the first terminal determines the CAPC of the SL DRB based on the CAPC of the SL DRB carried in the SIB or the pre-configuration.

Optionally, in a case that an SIB or a pre-configuration carries the CAPC of the SL DRB, the first terminal may determine the CAPC of the SL DRB carried in the SIB or the pre-configuration as the CAPC of the SL DRB. That is, the first terminal may use the configured CAPC.

Optionally, in an embodiment of the present disclosure, the first terminal may configure the CAPC of the SL DRB to a second terminal via an SL RRC reconfiguration message. Optionally, after determining the CAPC of the SL DRB, the first terminal in the first state may configure the CAPC of the SL DRB to the second terminal via the SL RRC reconfiguration message.

In a possible implementation, a first terminal in an RRC connected state receives an RRC dedicated signaling for adding or modifying an SL DRB, the RRC dedicated signaling carries the CAPC of the SL DRB, and the first terminal configures the CAPC of the SL DRB to the second terminal via the SL RRC reconfiguration message. As an example, the CAPC of the SL DRB carried in the RRC dedicated signaling may be configured to the second terminal via an SLRB-Config signaling in the SL RRC reconfiguration message.

In a possible implementation, a first terminal in an RRC IDLE/INACTIVE state/OOC state receives an SIB or a pre-configuration signaling for adding or modifying an SL DRB, and the CAPC of the SL DRB is carried in the SIB or the pre-configuration. However, the first terminal ignores the CAPC of the SL DRB carried in the SIB or the pre-configuration, the first terminal determines the CAPC of the SL DRB by itself, and the first terminal configures the CAPC of the SL DRB to the second terminal via the SL RRC reconfiguration message. As an example, the first terminal may configure the CAPC of the SL DRB determined by the first terminal itself to the second terminal via an SLRB-Config signaling in the SL RRC reconfiguration message.

In a possible implementation, a first terminal in an RRC IDLE/INACTIVE state/OOC state receives an SIB or a pre-configuration signaling for adding or modifying an SL DRB, the SIB or the pre-configuration carries the CAPC of the SL DRB, and the first terminal uses this CAPC as the CAPC of the SL DRB, and the first terminal configures the CAPC of the SL DRB to the second terminal via the SL RRC reconfiguration message. As an example, the first terminal may configure the CAPC of the SL DRB determined by the first terminal itself to the second terminal via an SLRB-Config signaling in the SL RRC reconfiguration message.

In a possible implementation, a first terminal in an RRC IDLE/INACTIVE state/OOC state receives an SIB or a pre-configuration signaling for adding or modifying an SL DRB, and the SIB or the pre-configuration does not carry the CAPC of the SL DRB. The first terminal determines the CAPC by itself, and the first terminal configures the CAPC of the SL DRB to the second terminal via the SL RRC reconfiguration message. As an example, the first terminal may configure the CAPC of the SL DRB determined by the first terminal itself to the second terminal via an SLRB-Config signaling in the SL RRC reconfiguration message.

By implementing the embodiments of the present disclosure, it is configured that the mapping table between the PQIs and the CAPCs is applicable to the side of the terminal. In this way, the terminal in an RRC idle state, an inactive state or an OOC state can determine the CAPC of the SL DRB based on the mapping table, which can solve a problem of how the terminal in the RRC idle state, the inactive state or the OOC state obtains the CAPC of the SL DRB in the scenario of the Sidelink-U, ensuring the CAPC of the SL DRB determined by the terminal in the RRC idle state, the inactive state or the OOC state to be more accurate, thereby ensuring a priority in a listen before talk (LBT) procedure.

In some embodiments of the present disclosure, how the first terminal determines the CAPC of the SL DRB may be described from the perspective of the resource allocation mode supported by the first terminal. Referring to FIG. 4, FIG. 4 is a flow chart of another method for determining a channel access priority class (CAPC) provided by an embodiment of the present disclosure. It should be noted that the determination method may be applied to SL-U scenarios, and the determination method according to the embodiment of the present disclosure may be executed by the first terminal. As shown in FIG. 4, the method may include, but not limited to, the following steps.

In step 401, in a case that the first terminal operates in resource allocation mode 2, the first terminal determines the CAPC of the SL DRB based on the mapping table between the PQIs and the CAPCs.

In a possible implementation, the first terminal operating in the resource allocation mode 2 may be in an RRC connected state, an RRC IDLE/INACTIVE state, or an OOC state. Regardless of the state of the first terminal, as long as the first terminal operates in the resource allocation mode 2, the first terminal determines the CAPC of the SL DRB by itself, that is, to determine the CAPC of the SL DRB based on the mapping table between the PQIs and the CAPCs.

In a possible implementation, for a standardized PQI, a first terminal operating in the resource allocation mode 2 may look up the mapping table between the PQIs and the CAPCs based on a PQI of a QoS flow multiplexed in one SL DRB to determine the CAPC of the SL DRB. For example, if a value of the PQI of the QoS flow multiplexed in one SL DRB is determined to be 23, and the PQI is a standardized PQI, then the mapping table includes a CAPC corresponding to the PQI of 23, so by looking up the mapping table, the CAPC corresponding to the PQI of 23 may be determined as the CAPC of the SL DRB. For another example, if values of PQIs of QoS flows multiplexed in one SL DRB are determined to be 23 and 58, and the PQIs are standardized PQIs, then the mapping table includes a CAPC corresponding to the PQI of 23 and a CAPC corresponding to the PQI of 58, and the CAPC of the SL DRB is determined based on the CAPC corresponding to the PQI of 23 and the CAPC corresponding to the PQI of 58.

In another possible implementation, for a non-standardized PQI, the first terminal operating in the resource allocation mode 2 may determine a PQI (a non-standardized PQI) of a QoS flow multiplexed in one SL DRB, may determine a standardized PQI best matching a QoS attribute based on the QoS attribute of the non-standardized PQI, and may query the mapping table between the PQIs and the CAPCs based on the standardized PQI best matching the QoS attribute, so as to determine the CAPC of the SL DRB. Optionally, the first terminal operating in the resource allocation mode 2 queries the mapping table by using the standardized PQI best matching the QoS attribute of the non-standardized PQI, to find a CAPC corresponding to the standardized PQI best matching the QoS attribute, and takes the CAPC as the CAPC corresponding to the non-standardized PQI. In order to comprehensively consider the equity between different types of services, the first terminal simultaneously considers the CAPCs of multiple QoS flows multiplexed in the SL DRB to determine the CAPC of the SL DRB.

In a possible implementation, in response to obtaining the CAPC of the SL DRB from a first dedicated RRC signaling or an SIB or a pre-configuration, the first terminal ignores the CAPC of the SL DRB obtained. Optionally, even if the first terminal obtains the CAPC of the SL DRB from the first dedicated RRC signaling or the SIB or the pre-configuration, the first terminal may ignore configuration or the pre-configuration by a network device, and may determine the CAPC of the SL DRB based on the mapping table between the PQIs and the CAPCs. For example, the first terminal may determine the CAPC of the SL DRB by querying the mapping table between the PQIs and the CAPCs based on the PQI or the QoS attribute of the QoS flow multiplexed in one SL DRB.

In another possible implementation, in response to a first dedicated RRC signaling or an SIB or a pre-configuration not carrying the CAPC of the SL DRB, the first terminal determines the CAPC of the SL DRB based on the mapping table between the PQIs and the CAPCs. Optionally, in a case that the first dedicated RRC signaling or the SIB or the pre-configuration does not carry the CAPC of the SL DRB, the first terminal determines the CAPC of the SL DRB by itself based on the mapping table between the PQIs and the CAPCs.

In an embodiment of the present disclosure, a possible implementation for determining the CAPC of the SL DRB may be as follows. In a case that the first terminal operates the in resource allocation mode 2, in response to a first dedicated RRC signaling or an SIB or a pre-configuration carrying the CAPC of the SL DRB, the first terminal determines the CAPC of the SL DRB based on the CAPC of the SL DRB carried in the first dedicated RRC signaling or the SIB or the pre-configuration.

Optionally, in a case that the first dedicated RRC signaling or the SIB or the pre-configuration carries the CAPC of the SL DRB, the first terminal may determine the CAPC of the SL DRB carried in the first dedicated RRC signaling or the SIB or the pre-configuration as the CAPC of the SL DRB. That is, the first terminal may use the configured CAPC.

Optionally, in an embodiment of the present disclosure, the first terminal may configure the CAPC of the SL DRB to a second terminal via an SL RRC reconfiguration message. Optionally, after determining the CAPC of the SL DRB, the first terminal operating in the resource allocation mode 2 may configure the CAPC of the SL DRB to the second terminal via the SL RRC reconfiguration message.

In a possible implementation, the first terminal operating in the resource allocation mode 2 receives an RRC dedicated signaling (the first terminal in the resource allocation mode 2 may be in an RRC connected state) or an SIB or a pre-configuration signaling for adding or modifying an SL DRB, and the CAPC of the SL DRB is carried in the RRC dedicated signaling or the SIB or the pre-configuration signaling. However, the first terminal ignores the CAPC of the SL DRB carried in the RRC dedicated signaling or the SIB or the pre-configuration signaling, the first terminal determines the CAPC of the SL DRB by itself, and the first terminal configures the CAPC of the SL DRB to the second terminal via the SL RRC reconfiguration message. As an example, the CAPC of the SL DRB determined by the first terminal itself may be configured to the second terminal via an SLRB-Config signaling in the SL RRC reconfiguration message.

In a possible implementation, a first terminal operating in the resource allocation mode 2 receives an RRC dedicated signaling (the first terminal in resource allocation mode 2 may be in an RRC connected state) or an SIB or a pre-configuration signaling for adding or modifying an SL DRB, and the CAPC of the SL DRB is carried in the RRC dedicated signaling or the SIB or the pre-configuration signaling. The first terminal uses this CAPC as the CACP of the SL DRB, and the first terminal configures the CAPC of the SL DRB to the second terminal via the SL RRC reconfiguration message. As an example, the first terminal may configure the CAPC of the SL DRB determined by the first terminal itself to the second terminal via an SLRB-Config signaling in the SL RRC reconfiguration message.

In a possible implementation, a first terminal operating in the resource allocation mode 2 receives an RRC dedicated signaling (the first terminal in the resource allocation mode 2 may be in an RRC connected state) or an SIB or a pre-configuration signaling for adding or modifying an SL DRB, and the RRC dedicated signaling or the SIB or the pre-configuration signaling does not carry the CAPC of the SL DRB. The first terminal determines the CAPC by itself, and the first terminal configures the CAPC of the SL DRB to the second terminal via the SL RRC reconfiguration message. As an example, the first terminal may configure the CAPC of the SL DRB determined by the first terminal itself to the second terminal via an SLRB-Config signaling in the SL RRC reconfiguration message.

In a possible implementation, a first terminal operating in the resource allocation mode 1 receives an RRC dedicated signaling for adding or modifying an SL DRB, the RRC dedicated signaling carries the CAPC of the SL DRB, and the first terminal configures the CAPC of the SL DRB carried in the RRC dedicated signaling to the second terminal via an SL RRC reconfiguration message. As an example, the CAPC of the SL DRB carried in the RRC dedicated signaling may be configured to the second terminal via an SLRB-Config signaling in the SL RRC reconfiguration message.

By implementing the embodiments of the present disclosure, it is configured that the mapping table between the PQIs and the CAPCs is applicable to the side of the terminal. In this way, the terminal operating in the resource allocation mode 2 can determine the CAPC of the SL DRB based on the mapping table, which can solve a problem of how the terminal operating in the resource allocation mode 2 obtains the CAPC of the SL DRB in the scenario of the Sidelink-U, ensuring the CAPC of the SL DRB determined by the terminal to be more accurate, thereby ensuring a priority in a listen before talk (LBT) procedure.

In an embodiment of the present disclosure, a default CAPC may be defined, and a CAPC for a non-standardized PQI may be determined based on the default CAPC. In a possible implementation, the first terminal in a first state obtains configuration information of at least one default SL DRB from an SIB or a pre-configuration signaling, where the configuration information of the at least one default SL DRB includes the CAPC of the at least one default SL DRB; and determines a PQI of a QoS flow multiplexed in one SL DRB. In a case that the PQI determined is a non-standardized PQI, the first terminal obtains a target default SL DRB best matching a QoS attribute corresponding to the non-standardized PQI from the at least one default SL DRB, and takes a CAPC of the target default SL DRB as the CAPC corresponding to the non-standardized PQI, so as to determine the CAPC of the SL DRB.

In another possible implementation, the first terminal selects one target default SL DRB from the default SL DRBs according to the implementation, and the first terminal takes the CAPC of the target default SL DRB as the CAPC corresponding to the non-standardized PQI, so as to determine the CAPC of the SL DRB.

In another possible implementation, the first terminal determines that there is a non-standardized PQI in the SL DRB, then finds a default SL DRB best matching a QoS attribute of the SL DRB from the default DRB configuration, and directly uses the CAPC of the default SL DRB as the CAPC of the SL DRB.

In another possible implementation, as long as the first terminal determines that the SL DRB includes a non-standardized PQI, the first terminal directly selects one from the default SL DRBs according to the implementation, and uses a CAPC of the selected default SL DRB as the CAPC of the SL DRB.

Optionally, configuration information of at least one default SL DRB is defined in an embodiment of the present disclosure, which may be carried in an SIB or a pre-configuration signaling, and the configuration information of the at least one default SL DRB includes a CAPC of the at least one default SL DRB. For a non-standardized PQI, a first terminal in an RRC IDLE/INACTIVE state or an OOC state may select a default SL DRB best matching a QoS attribute of the non-standardized PQI from the configuration information of the at least one default SL DRB, and may determine the CAPC of the multiplexed SL DRB by using a CAPC corresponding to the default SL DRB best matching the QoS attribute of the non-standardized PQI.

It may be appreciated that the above embodiments are implementations of the method for determining a channel access priority class (CAPC) according to the embodiments of the present disclosure described from the side of the first terminal. An embodiment of the present disclosure further provides a method for configuring a channel access priority class (CAPC), and implementation of the method for configuring the channel access priority class (CAPC) will be described from a side of a second terminal. Referring to FIG. 5, FIG. 5 is a flow chart of a method for configuring a channel access priority class (CAPC) provided by an embodiment of the present disclosure. It should be noted that the method of the embodiment of the present disclosure is applied to SL-U scenarios and may be executed by the second terminal. As shown in FIG. 5, the method may include, but not limited to, the following steps.

In step 501, the CAPC of an SL DRB configured by a first terminal via an SL RRC reconfiguration message is received.

In some embodiments of the present disclosure, the CAPC of the SL DRB is determined by the first terminal based on a mapping table between PQIs and CAPCs.

In a possible implementation, the CAPC of the SL DRB may be determined by a first terminal in a first state (such as an RRC IDLE state or an RRC INACTIVE state or an OOC state) based on the mapping table between the PQIs and the CAPCs. The implementation of the first terminal determining the CAPC of the SL DRB based on the mapping table between the PQIs and the CAPCs may be implemented by any of the embodiments of the present disclosure, which is not limited here and will not be repeated.

In a possible implementation, the CAPC of the SL DRB may be determined by the first terminal operating in resource allocation mode 2 based on the mapping table between the PQIs and the CAPCs. The implementation of the first terminal determining the CAPC of the SL DRB based on the mapping table between the PQIs and the CAPCs may be implemented in any of the embodiments of the present disclosure, which is not limited here and will not be described in detail.

In another embodiment of the present disclosure, the CAPC of the SL DRB is configured or pre-configured by a network device.

In a possible implementation, the first terminal obtains the CAPC of the SL DRB from a dedicated RRC signaling or an SIB or a pre-configuration, and the first terminal may configure the CAPC of the SL DRB carried in the dedicated RRC signaling or the SIB or the pre-configuration to the second terminal via an SL RRC reconfiguration message.

By implementing the embodiments of the present disclosure, the first terminal configures the CAPC of the SL DRB to the second terminal via the SL RRC reconfiguration message, which can solve a problem of how a terminal obtains a CAPC of an SL DRB in the scenario of the Sidelink-U, ensuring that the CAPC of the SL DRB determined by the terminal is more accurate, thereby ensuring a priority in a listen before talk (LBT) procedure.

In the above embodiments provided by the present disclosure, the methods provided by the embodiments of the present disclosure are introduced from the perspectives of the first terminal and the second terminal, respectively. In order to implement functions in the methods provided by the above embodiments of the present disclosure, the first terminal and the second terminal may include a hardware structure and a software module, and implement the above functions in a form of a hardware structure, a software module, or a hardware structure plus a software module. One of the above functions may be executed in a form of a hardware structure, a software module, or a hardware structure plus a software module.

Referring to FIG. 6, FIG. 6 is a schematic structural diagram of a communication device 60 provided in an embodiment of the present disclosure. The communication device 60 shown in FIG. 6 may include a transceiving module 601 and a processing module 602. The transceiving module 601 may include a sending module and/or a receiving module, the sending module is configured to implement a sending function, the receiving module is configured to implement a receiving function, and the transceiving module 601 may implement a sending function and/or a receiving function.

The communication device 60 may be a terminal (for example, the first terminal or the second terminal in the aforementioned method embodiments), or a device in the terminal, or a device that may be used in conjunction with the terminal.

In a case that the communication device 60 is a terminal (for example, the first terminal in the aforementioned method embodiments), the processing module 602 is configured to determine a CAPC of an SL DRB.

In an implementation, the processing module 602 is specifically configured to determine the CAPC of the SL DRB based on a mapping table between PC5 quality of service indicators (PQIs) and CAPCs.

In an implementation, the processing module 602 is specifically configured to: in a case that the first terminal is in a first state, determine the CAPC of the SL DRB based on the mapping table between the PQIs and the CAPCs; where the first state includes any one of: a radio resource control (RRC) idle (IDLE) state; an RRC inactive (INACTIVE) state; or an out of coverage (OOC) state.

In a possible implementation, the processing module 602 is further configured to: in response to obtaining the CAPC of the SL DRB from a system information block (SIB) or a pre-configuration, ignore the CAPC of the SL DRB obtained.

In a possible implementation, the processing module 602 is specifically configured to: in response to an SIB or a pre-configuration not carrying the CAPC of the SL DRB, determine the CAPC of the SL DRB based on the mapping table between the PQIs and the CAPCs.

In a possible implementation, the processing module 602 is specifically configured to: in a case that the first terminal is in a first state, in response to an SIB or a pre-configuration carrying the CAPC of the SL DRB, determine the CAPC of the SL DRB based on the CAPC of the SL DRB carried in the SIB or the pre-configuration.

In a possible implementation, the processing module 602 is specifically configured to: in a case that the first terminal operates in resource allocation mode 2, determine the CAPC of the SL DRB based on the mapping table between the PQIs and the CAPCs.

In a possible implementation, the processing module 602 is further configured to: in response to obtaining the CAPC of the SL DRB from a first dedicated RRC signaling or an SIB or a pre-configuration, ignore the CAPC of the SL DRB obtained.

In a possible implementation, the processing module 602 is specifically configured to: in response to a first dedicated RRC signaling or an SIB or a pre-configuration not carrying the CAPC of the SL DRB, determine the CAPC of the SL DRB based on the mapping table between the PQIs and the CAPCs.

In a possible implementation, the processing module 602 is specifically configured to: in a case that the first terminal operates in resource allocation mode 2, in response to a first dedicated RRC signaling or an SIB or a pre-configuration carrying the CAPC of the SL DRB, determine the CAPC of the SL DRB based on the CAPC of the SL DRB carried in the first dedicated RRC signaling or the SIB or the pre-configuration.

In a possible implementation, the processing module 602 is specifically configured to: determine a PQI of a quality of service (QoS) flow multiplexed in one SL DRB; and determine the CAPC of the SL DRB from the mapping table between the PQIs and the CAPCs according to the PQI determined.

In a possible implementation, the processing module 602 is specifically configured to: in response to the PQI determined being a standardized PQI, determining the CAPC of the SL DRB from the mapping table between the PQIs and the CAPCs according to the PQI determined; or, in response to the PQI determined being a non-standardized PQI, determine a standardized PQI best matching a QoS attribute based on the QoS attribute corresponding to the PQI determined, and determine the CAPC of the SL DRB from the mapping table between the PQIs and the CAPCs according to the standardized PQI best matching the QoS attribute.

In a possible implementation, the processing module 602 is further configured to: configure the CAPC of the SL DRB to a second terminal via an SL RRC reconfiguration message.

In a possible implementation, the processing module 602 is specifically configured to: in a case that the first terminal is in a first state, obtain configuration information of at least one default SL DRB from an SIB or a pre-configuration signaling, where the configuration information of the at least one default SL DRB includes the CAPC of the at least one default SL DRB; determine a PQI of a QoS flow multiplexed in one DRB; in a case that the PQI determined is a non-standardized PQI, obtain a target default SL DRB best matching a QoS attribute corresponding to the PQI determined from the at least one default SL DRB; and determine the CAPC of the SL DRB based on the CAPC of the target default SL DRB.

In a case that the communication device 60 is a terminal (for example, the second terminal in the aforementioned method embodiments), the transceiving module 601 is configured to receive a CAPC of a sidelink data radio bearer (SL DRB) configured by a first terminal via a sidelink radio resource control (SL RRC) reconfiguration message.

In an implementation, the CAPC of the SL DRB is determined by the first terminal based on a mapping table between PC5 quality of service indicators (PQIs) and CAPCs; or the CAPC of the SL DRB is configured or pre-configured by a network device.

Regarding the device in the above embodiments, the specific manner in which each module performs operations has been described in detail in the method embodiments, and will not be repeated here.

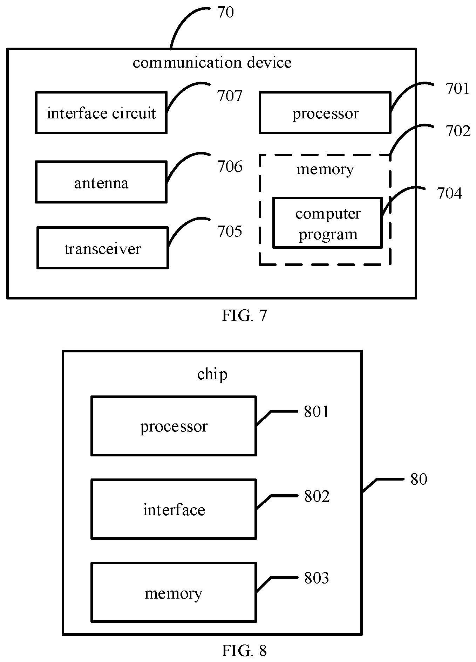

Referring to FIG. 7, FIG. 7 is a schematic structural diagram of another communication device 70 provided by an embodiment of the present disclosure. The communication device 70 may be a terminal; or it may be a chip, a chip system, or a processor or the like that supports the terminal to implement the above method, or it may be a chip, a chip system, or a processor or the like that supports the terminal to implement the above method. The device may be used to implement the method described in the above method embodiments, and for details, reference can be made to the description in the above method embodiments.

The communication device 70 may include one or more processors 701. The processor 701 may be a general-purpose processor or a special-purpose processor, or the like. For example, the processor may be a baseband processor or a central processing unit. The baseband processor may be used to process communication protocols and communication data. The central processor may be used to control the communication device (for example, a base station, a baseband chip, a terminal, a chip of the terminal, a DU or a CU, etc.), to execute the computer program, and to process data in the computer program.

Optionally, the communication device 70 may also include one or more memories 702, on which a computer program 704 may be stored. The processor 701 is configured to execute the computer program 704 to cause the communication device 70 to perform steps described in the above method embodiments. Optionally, the memory 702 may also store data. The communication device 70 and the memory 702 may be arranged separately or integrated together.

Optionally, the communication device 70 may also include a transceiver 705 and an antenna 706. The transceiver 705 may be referred to as a transceiver unit, a transceiving module, a transceiver circuit, etc., and is configured to implement receiving and transmitting functions. The transceiver 705 may include a receiver and a transmitter. The receiver may be referred to as a receiver unit or a receiver circuit, etc., and configured to implement a receiving function; the transmitter may be referred to as a transmitter unit, a transmitter circuit, etc., and configured to implement a transmitting function.

Optionally, the communication device 70 may also include one or more interface circuits 707. The interface circuit 707 is configured to receive code instructions and transmit them to the processor 701. The processor 701 is configured to execute the code instructions to cause the communication device 70 to perform the method described in the above method embodiments.

In a case that the communication device 70 is a terminal (for example, the first terminal in the aforementioned method embodiments), the processor 701 is configured to execute step 101 in FIG. 1; execute step 201 in FIG. 2; step 301 in FIG. 3; or step 401 in FIG. 4.

In a case that the communication device 70 is a terminal (for example, the second terminal in the aforementioned method embodiments), the transceiver 705 is configured to execute step 501 in FIG. 5.

In an implementation, the processor 701 may include a transceiver for implementing receiving and transmitting functions. For example, the transceiver may be a transceiver circuit, an interface, or an interface circuit. The transceiver circuit, the interface or the interface circuit for implementing receiving and transmitting functions may be separated from each other or integrated together. The above-mentioned transceiver circuit, interface or interface circuit may be configured to read and write codes/data, or transmit or transfer signals.

In an implementation, the processor 701 may store a computer program, and the computer program, when running on the processor 701, causes the communication device 70 to perform the method described in the above method embodiments. The computer program may be solidified in the processor 701, in which case the processor 701 may be implemented by hardware.

In one implementation, the communication device 70 may include a circuit, and the circuit can implement the functions of transmitting, receiving, or communicating in the foregoing method embodiments. The processor and the transceiver described in the present disclosure may be implemented in an integrated circuit (IC), an analog IC, a radio frequency integrated circuit (RFIC), a mixed signal IC, an application specific integrated circuits (ASIC), a printed circuit board ( printed circuit board (PCB), electronic equipment, etc. The processor and the transceiver may be manufactured using various IC process techniques, such as complementary metal oxide semiconductor (CMOS), N-channel Metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network device, and a terminal (for example, the terminal in the above method embodiments, the scope of the communication device described in the present disclosure is not limited thereto, and the structure of the communication device may not be limited by FIG. 7. The communication device may be a stand-alone device or may be a part of a larger device. For example, the communication device may be:
(1) an independent integrated circuit (IC), or chip, or chip system, or subsystem;
(2) a collection of one or more ICs, where, optionally, the IC collection may also include a storage component for storing data and a computer program;
(3)ASIC, such as modem;
(4) a module that can be embedded into other devices;
(5) a receiver, a terminal, an intelligent terminal, a cellular phone, a wireless equipment, a handheld device, a mobile unit, a vehicle-mounted equipment, a network device, a cloud equipment, an artificial intelligence equipment, etc.;
(6) other component(s), etc.

In the case where the communication device may be a chip or a chip system, reference may be made to a structural diagram of the chip as shown in FIG. 8. The chip shown in FIG. 8 includes a processor 801 and an interface 802. The number of processors 801 may be one or multiple, and the number of interfaces 802 may be multiple.

In a case that the chip is configured to implement functions of the terminal in the embodiment of the present disclosure (for example, the first terminal in the aforementioned method embodiments), the processor 801 is configured to determine a CAPC of an SL DRB.

In an implementation, the processor 801 is specifically configured to: determine the CAPC of the SL DRB based on a mapping table between PC5 quality of service indicators (PQIs) and CAPCs.

In an implementation, the processor 801 is specifically configured to: in a case that the first terminal is in a first state, determine the CAPC of the SL DRB based on the mapping table between the PQIs and the CAPCs; where the first state includes any one of: a radio resource control (RRC) idle (IDLE) state; an RRC inactive (INACTIVE) state; or an out of coverage (OOC) state.

In a possible implementation, the processor 801 is further configured to: in response to obtaining the CAPC of the SL DRB in the system information block (SIB) or pre-configuration, ignore the obtained CAPC of the SL DRB.

In a possible implementation manner, the processor 801 is specifically configured to: in response to an SIB or a pre-configuration not carrying the CAPC of the SL DRB, determine the CAPC of the SL DRB based on the mapping table between the PQIs and the CAPCs.

In a possible implementation, the processor 801 is specifically configured to: in a case that the first terminal is in a first state, in response to an SIB or a pre-configuration carrying the CAPC of the SL DRB, determine the CAPC of the SL DRB based on the CAPC of the SL DRB carried in the SIB or the pre-configuration.

In a possible implementation, the processor 801 is specifically configured to: in a case that the first terminal operates in resource allocation mode 2, determine the CAPC of the SL DRB based on the mapping table between the PQIs and the CAPCs.

In a possible implementation, the processor 801 is further configured to: in response to obtaining the CAPC of the SL DRB from a first dedicated RRC signaling or an SIB or a pre-configuration, ignore the CAPC of the SL DRB obtained.

In a possible implementation, the processor 801 is specifically configured to: in response to a first dedicated RRC signaling or an SIB or a pre-configuration not carrying the CAPC of the SL DRB, determine the CAPC of the SL DRB based on the mapping table between the PQIs and the CAPCs.

In a possible implementation, the processor 801 is specifically configured to: in a case that the first terminal operates in resource allocation mode 2, in response to a first dedicated RRC signaling or an SIB or a pre-configuration carrying the CAPC of the SL DRB, determine the CAPC of the SL DRB based on the CAPC of the SL DRB carried in the first dedicated RRC signaling or the SIB or the pre-configuration.

In a possible implementation, the processor 801 is specifically configured to: determine a PQI of a quality of service (QoS) flow multiplexed in one SL DRB; and determine the CAPC of the SL DRB from the mapping table between the PQIs and the CAPCs according to the PQI determined.

In a possible implementation, processor 801 is specifically configured to: in response to the PQI determined being a standardized PQI, determining the CAPC of the SL DRB from the mapping table between the PQIs and the CAPCs according to the PQI determined; or, in response to the PQI determined being a non-standardized PQI, determine a standardized PQI best matching a QoS attribute based on the QoS attribute corresponding to the PQI determined, and determine the CAPC of the SL DRB from the mapping table between the PQIs and the CAPCs according to the standardized PQI best matching the QoS attribute.

In a possible implementation, the processor 801 is further configured to: configure the CAPC of the SL DRB to a second terminal via an SL RRC reconfiguration message.

In a possible implementation, the processor 801 is specifically configured to: in a case that the first terminal is in a first state, obtain configuration information of at least one default SL DRB from an SIB or a pre-configuration signaling, where the configuration information of the at least one default SL DRB includes the CAPC of the at least one default SL DRB; determine a PQI of a QoS flow multiplexed in one DRB; in a case that the PQI determined is a non-standardized PQI, obtain a target default SL DRB best matching a QoS attribute corresponding to the PQI determined from the at least one default SL DRB; and determine the CAPC of the SL DRB based on the CAPC of the target default SL DRB.

In a case that the chip is configured to implement functions of the terminal in the embodiments of the present disclosure (for example, the second terminal in the aforementioned method embodiments), the interface 802 is configured to receive a CAPC of a sidelink data radio bearer (SL DRB) configured by a first terminal via a sidelink radio resource control (SL RRC) reconfiguration message.

In an implementation, the CAPC of the SL DRB is determined by the first terminal based on a mapping table between PC5 quality of service indicators (PQIs) and CAPCs; or the CAPC of the SL DRB is configured or pre-configured by a network device.

Optionally, the chip further includes a memory 803, and the memory 803 is configured to store necessary computer programs and data.

It may be further appreciated by those skilled in the art that various illustrative logical blocks and steps listed in the embodiments of the present disclosure can be implemented by electronic hardware, computer software, or a combination of both. Whether such functions are implemented in hardware or software depends on the specific application and the overall system design requirement. Those skilled in the art can use various methods to implement the described functions for each specific application, but such implementation shall not be understood as exceeding the protection scope of the embodiments of the present disclosure.

An embodiment of the present disclosure further provides a communication system. The system includes a communication device as the terminal (for example, the first terminal in the aforementioned method embodiments), and a communication device as the terminal (for example, the second terminal in the aforementioned method embodiments) in the aforementioned embodiment of FIG. 5; or the system includes a communication device as the terminal (for example, the first terminal in the aforementioned method embodiments) and a communication device as the terminal (for example, the second terminal in the aforementioned method embodiments) in the aforementioned embodiment of FIG. 6.

The present disclosure further provides a readable storage medium, on which instructions are stored. When the instructions are executed by a computer, functions of any of the above method embodiments are implemented.

The present disclosure further provides a computer program product. The computer program product is executed by a computer to implement functions of any of the above method embodiments.

The above embodiments may be implemented in whole or in part by software, hardware, firmware, or any combination thereof. When implemented by software, it may be implemented in whole or in part in the form of a computer program product. The computer program product includes one or more computer programs. When the computer program is loaded and executed by a computer, the processes or functions described in the embodiments of the present disclosure are generated in whole or in part. The computer may be a general-purpose computer, a special-purpose computer, a computer network, or other programmable device. The computer program may be stored in or transferred from one computer-readable storage medium to another computer-readable storage medium. For example, the computer program may be transferred from a website, a computer, a server, or a data center to another website, computer, server or data center to another website, a computer, a server, or a data center to another website, computer, server or data center through wired means (such as coaxial cable, optical fiber, digital subscriber line (DSL)) or wireless means (such as infrared, wireless, microwave, etc.). The computer-readable storage medium may be any available medium that can be accessed by a computer or a data storage device integrated by one or more available media, which includes a server, a data center, and so on. The available media may be magnetic media (e.g., floppy disk, hard disk, magnetic tape), optical media (e.g., high-density digital video discs (DVD)), or semiconductor media (e.g., solid state disk (SSD)) etc.

It may be appreciated by those ordinary skill in the art that numerical numbers such as first and second involved in the present disclosure are only for convenience of description, and are not used to limit the scope of the embodiments of the present disclosure, or to indicate the order.

At least one in the present disclosure may also be described as one or more, and the plurality may be two, three, four or more, which are not limited by the present disclosure. In the embodiments of the present disclosure, technical features are distinguished by terms "first", "second", "third", "A", "B", "C", and "D", etc. The technical features described by the terms "first", "second", "third", "A", "B", "C" and "D" are not in an order of precedence or in an order of size.

The corresponding relationships shown in each table in the present disclosure can be configured or predefined. The values of the information in each table are only examples and can be configured as other values, which is not limited by the present disclosure. When the correspondence between information and each parameter is configured, it is not necessarily required to configure all the correspondences shown in each table. For example, in the table in the present disclosure, the correspondences shown in some rows may not be configured. For another example, appropriate form adjustments can be made based on the above table, such as splitting, merging, etc. The names of the parameters shown in the titles of the above tables may also be other names understandable by the communication apparatus, and the values or expressions of the parameters may also be other values or expressions understandable by the communication apparatus. When implementing the above tables, other data structures can also be used, such as array, queue, container, stack, linear list, pointer, linked list, tree, graph, structure, class, heap, distributed table or hash table.

The term predefined in the present disclosure may be understood as defined, predefined, storage, pre-storage, pre-negotiation, pre-configuration, solidification, or pre-burning.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solution. Those of ordinary skill in the art may implement the described functionality using different methods for each specific application, but such implementations should not be considered as exceeding the scope of the present disclosure.

Those of ordinary skill in the art can clearly understand that for the convenience and simplicity of description, reference may be made to the corresponding processes in the foregoing method embodiments for the specific working processes of the systems, devices and units described above, which will not be described again here.

The above embodiments are only specific implementations of the present disclosure, and the protection scope of the present disclosure is not limited thereto. Changes or substitutions easily occurring to any person familiar with the technical field within the technical scope disclosed in the present disclosure shall fall within the protection scope of the present disclosure. Therefore, the protection scope of the present disclosure should be subject to the protection scope of the claims.

## Claims

1. A method for determining a channel access priority class (CAPC), applied to a scenario of an unlicensed spectrum, wherein the method is executed by a first terminal and comprises:
determining the CAPC of a sidelink data radio bearer (SL DRB).

2. The method according to claim 1, wherein the determining the CAPC of the sidelink data radio bearer (SL DRB) comprises:
determining the CAPC of the SL DRB based on a mapping table between PC5 quality of service indicators (PQIs) and CAPCs.

3. The method according to claim 2, wherein the determining the CAPC of the SL DRB based on the mapping table between the PQIs and the CAPCs comprises:
in a case that the first terminal is in a first state, determining, by the first terminal, the CAPC of the SL DRB based on the mapping table between the PQIs and the CAPCs; wherein the first state comprises any one of:
a radio resource control (RRC) idle (IDLE) state;
an RRC inactive (INACTIVE) state; or
an out of coverage (OOC) state.

4. The method according to claim 3, further comprising:
in response to obtaining the CAPC of the SL DRB from a system information block (SIB) or a pre-configuration, ignoring, by the first terminal, the CAPC of the SL DRB obtained.

5. The method according to claim 3, wherein the determining, by the first terminal, the CAPC of the SL DRB based on the mapping table between the PQIs and the CAPCs comprises:
in response to an SIB or a pre-configuration not carrying the CAPC of the SL DRB, determining, by the first terminal, the CAPC of the SL DRB based on the mapping table between the PQIs and the CAPCs.

6. The method according to claim 1, wherein the determining the CAPC of the SL DRB comprises:
in a case that the first terminal is in a first state, in response to an SIB or a pre-configuration carrying the CAPC of the SL DRB, determining, by the first terminal, the CAPC of the SL DRB based on the CAPC of the SL DRB carried in the SIB or the pre-configuration.

7. The method according to claim 2, wherein the determining the CAPC of the SL DRB based on the mapping table between the PQIs and the CAPCs comprises:
in a case that the first terminal operates in resource allocation mode 2, determining, by the first terminal the CAPC of the SL DRB based on the mapping table between the PQIs and the CAPCs.

8. The method according to claim 7, further comprising:
in response to obtaining the CAPC of the SL DRB from a first dedicated RRC signaling or an SIB or a pre-configuration, ignoring, by the first terminal, the CAPC of the SL DRB obtained.

9. The method according to claim 7, wherein the determining, by the first terminal, the CAPC of the SL DRB based on the mapping table between the PQIs and the CAPCs comprises:
in response to a first dedicated RRC signaling or an SIB or a pre-configuration not carrying the CAPC of the SL DRB, determining, by the first terminal, the CAPC of the SL DRB based on the mapping table between the PQIs and the CAPCs.

10. The method according to claim 1, wherein the determining the CAPC of the SL DRB comprises:
in a case that the first terminal operates in resource allocation mode 2, in response to a first dedicated RRC signaling or an SIB or a pre-configuration carrying the CAPC of the SL DRB, determining, by the first terminal, the CAPC of the SL DRB based on the CAPC of the SL DRB carried in the first dedicated RRC signaling or the SIB or the pre-configuration.

11. The method according to any one of claims 3 to 5 and 7 to 9, wherein the determining, by the first terminal, the CAPC of the SL DRB based on the mapping table between the PQIs and the CAPCs comprises:
determining a PQI of a quality of service (QoS) flow multiplexed in one SL DRB; and
determining the CAPC of the SL DRB from the mapping table between the PQIs and the CAPCs according to the PQI determined.

12. The method according to claim 11, wherein the determining the CAPC of the SL DRB from the mapping table between the PQIs and the CAPCs according to the PQI determined comprises:
in response to the PQI determined being a standardized PQI, determining the CAPC of the SL DRB from the mapping table between the PQIs and the CAPCs according to the PQI determined; or,
in response to the PQI determined being a non-standardized PQI, determining a standardized PQI best matching a QoS attribute based on the QoS attribute corresponding to the PQI determined, and determining the CAPC of the SL DRB from the mapping table between the PQIs and the CAPCs according to the standardized PQI best matching the QoS attribute.

13. The method according to any one of claims 1 to 12, further comprising:
configuring the CAPC of the SL DRB to a second terminal via an SL RRC reconfiguration message.

14. The method according to claim 2, wherein the determining the CAPC of the SL DRB based on the mapping table between the PQIs and the CAPCs comprises:
in a case that the first terminal is in a first state, obtaining, by the first terminal, configuration information of at least one default SL DRB from an SIB or a pre-configuration signaling, wherein the configuration information of the at least one default SL DRB comprises the CAPC of the at least one default SL DRB;
determining a PQI of a QoS flow multiplexed in one DRB;
in a case that the PQI determined is a non-standardized PQI, obtaining, by the first terminal, a target default SL DRB best matching a QoS attribute corresponding to the PQI determined from the at least one default SL DRB; and
determining, by the first terminal, the CAPC of the SL DRB based on the CAPC of the target default SL DRB.

15. A method for configuring a channel access priority class (CAPC), applied to a scenario of an unlicensed spectrum, wherein the method is executed by a second terminal and comprises:
receiving the CAPC of a sidelink data radio bearer (SL DRB) configured by a first terminal via a sidelink radio resource control (SL RRC) reconfiguration message.

16. The method according to claim 15, wherein the CAPC of the SL DRB is determined by the first terminal based on a mapping table between PC5 quality of service indicators (PQIs) and CAPCs; or
the CAPC of the SL DRB is configured or pre-configured by a network device.

17. A communication device, comprising:
a processing module, configured to determine a channel access priority class (CAPC) of a sidelink data radio bearer (SL DRB).

18. A communication device, comprising:
a transceiving module, configured to receive a channel access priority class (CAPC) of a sidelink data radio bearer (SL DRB) configured by a first terminal via a sidelink radio resource control (SL RRC) reconfiguration message.

19. A communication device, comprising a processor and a memory, wherein the memory stores a computer program, and the processor, when executing the computer program stored in the memory, causes the device to perform the method according to any one of claims 1 to 14.

20. A communication device, comprising a processor and a memory, wherein the memory stores a computer program, and the processor, when executing the computer program stored in the memory, causes the device to perform the method according to any one of claim 15 or 16.

21. A computer-readable storage medium, configured to store instructions, wherein the instructions, when executed by a processor, cause the method according to any one of claims 1 to 14 to be performed.

22. A computer-readable storage medium, configured to store instructions, wherein the instructions, when executed by a processor, cause the method according to any one of claim 15 or 16 to be performed.
